# FASCICULE DE BREVET EUROPEEN

(11) **EP 0 926 173 B1**
(45) Date de publication et mention de la délivrance du brevet: **09.03.2005**
(21) Numéro de dépôt: 98403130.2
(22) Date de dépôt: 11.12.1998
(51) Int. Cl.: C08G 18/10, C08K 5/11, C08K 5/12, B29C 33/60, C08K 5/54

(54) **Procédé de moulage de polyurethane utilisant un agent de demoulage interne et les produits moules obtenus**
Giessverfahren für Polyurethane unter Verwendung eines internen Formtrennmittels und daraus hergestellte Formkörper
Moulding process for a polyurethane using an internal mould release agent and moulded products obtained therefrom

(30) Priorité: 26.12.1997 FR 9716571
(43) Date de publication de la demande: 30.06.1999
(73) Titulaire: WITCO, 75008 Paris (FR)
(72) Inventeur: Ghesquiere, Denis, 27370 Tourville la Campagne (FR); Loc'h, Daniel, 76570 Mesnil Panneville (FR)
(74) Mandataire: Peuscet, Jacques

(56) Documents cités:
- EP-A- 0 231 523
- WO-A-86/05502
- US-A- 3 504 081
- US-A- 3 875 069

## Description

La présente invention concerne un procédé de moulage de polyuréthane, dans lequel on utilise un agent de démoulage interne ainsi que les produits moulés obtenus par ce procédé, en particulier les chaussures comportant une semelle moulée.

Il est connu de mouler le polyuréthane en introduisant dans un moule ouvert ou fermé un mélange contenant un prépolymère d'isocyanate et au moins un composé hydroxylé, en particulier un polyéther polyol ou un polyester polyol ayant une fonctionnalité au moins égale à 2, susceptible de réagir avec le prépolymère d'isocyanate ainsi que différents additifs tels que des agents d'expansion, des catalyseurs, des stabilisants et des charges ou agents de renforcement.

Il est connu de pulvériser sur les moules, avant leur utilisation, un agent de démoulage externe, tel qu'une cire ou une silicone, généralement sous forme de solution dans un solvant ou de dispersion aqueuse. En l'absence d'agent de démoulage interne, il est nécessaire d'effectuer une nouvelle pulvérisation sur la surface du moule après chaque démoulage.

Il est connu, par ailleurs, d'ajouter dans le mélange à mouler un agent de démoulage interne qui a pour but de permettre d'effectuer plusieurs démoulages avant qu'il soit nécessaire d'effectuer une nouvelle pulvérisation d'agent de démoulage externe. Plus le nombre de démoulages est élevé, plus la cadence de moulage peut être augmentée, et, par conséquent, plus le procédé est économique. En outre, la réduction quantitative de l'utilisation d'agent de démoulage externe entraîne également une réduction du coût de fabrication et conduit à une amélioration sur le plan écologique en raison de la diminution de la quantité de solvant évaporée dans l'atmosphère, ainsi que la quantité d'agent de démoulage externe projetée hors du moule.

US-A-3 875 069 décrit des compositions lubrifiantes utiles pour le moulage de matériaux thermoplastiques. Ces compositions lubrifiantes comprennent une combinaison de :
A) des esters mélangés, présentant des indices d'hydroxyle ou d'acide de 0 à 6, de
   a) d'acides dicarboxyliques aliphatiques, cycloaliphatiques et/ou aromatiques,
   b) de polyols aliphatiques
   c) d'acides monocarboxyliques aliphatiques en C₁₂-C₃₀, et
B) des esters du groupe formé par :
   1) des esters d'acides dicarboxyliques et de monoalcools aliphatiques à longue chaîne contenant de 12 à 30 atomes de carbone dans la molécule,
   2) des esters de monôalcools aliphatiques en C₁₂-C₃₀, et d'acides monocarboxyliques aliphatiques en C₁₂-C₃₀,
   3) des esters totaux ou partiels de polyols aliphatiques et d'acides monocarboxyliques aliphatiques en C₁₂-C₃₀ de carbone dans la molécule,
   avec des proportions relatives de 1 : 3 à 9 : 1 entre les esters mélangés A et les esters B.

Les compositions sont ajoutées aux matériaux thermoplastiques qui sont des polymères, des polycondensats ou des produits d'addition.

Ce document indique que les esters A ou B utilisés seuls ont peu ou pas d'influence sur la non-adhésion lors de la mise en formé des matériaux thermoplastiques.

Il est également connu, par exemple par US-A-5 389 696, d'introduire dans le mélange à mouler, à raison de 1 à 10 % en poids par rapport au poids total du mélange à mouler, un agent de démoulage interne contenant des esters mixtes contenant 1) des diacides, 2) des polyols et 3) des monoacides carboxyliques ayant 12 à 30 atomes de carbone. Il est expressément indiqué, colonne 2 lignes 35-38, que cet agent ne doit pas contenir d'esters de diacides et de monoalcools aliphatiques ayant de 12 à 30 atomes de C. Lorsqu'on utilise un tel agent, il est difficile à doser car son mélange avec le prépolymère et/ou le polyol se fait difficilement.

Selon la présente invention, on a trouvé que certains diesters peuvent être utilisés seuls comme agent de démoulage interne, avec un résultat meilleur que celui obtenu avec le mélange préconisé par le brevet US-A-5 389 696 alors qu'ils sont explicitement exclus dans ce brevet.

La présente invention a, par conséquent, pour objet un procédé de moulage de polyuréthane selon lequel on introduit dans un moule un mélange contenant au moins un prépolymère d'isocyanate et au moins un composé organique hydroxylé susceptible de réagir avec ledit prépolymère, un agent de démoulage interne étant ajouté audit mélange, caractérisé par le fait que ledit agent de démoulage interne est constitué par un diester d'au moins un diacide aliphatique, aromatique, alicyclique ou dimère et d'au moins un monoalcool aliphatique linéaire ou ramifié, ledit diester comportant au total 24 à 52 atomes de carbone, de préférence 26 à 36 atomes de carbone. On utilise de préférence un diester d'un monoalcool comportant un nombre d'atomes de carbone compris entre 7 et 14.

Le diester utilisé peut être, par exemple, le phtalate de di-isodécyle, le phtalate de di-isoundécyle, le phtalate de di-isotridécyle, l'adipate de di-isononyle, l'adipate de di-isodécyle, l'adipate de di-isotridécyle, l'adipate de di-n(C12-C14) alkyle, le dodécanedioate de 2-éthylhexyle, le dodécanedioate de n-octyle, l'ester d'un dimère d'acide oléique et d'alcool 2-éthylhexylique (dimérate de 2-éthylhexyle) et l'ester d'un dimère d'acide oléique et d'alcool n-octylique (dimérate de n-octyle), ce diester permettant de mouler des produits d'un seul tenant, en particulier sous forme d'une couche de densité unique.

On utilise de préférence le phtalate de di-isotridécyle, l'adipate de di-isotridécyle, l'adipate de di-n(C12-C14) alkyle, le dodécanedioate de 2-éthylhexyle, le dodécanedioate de n-octyle, le dimérate de 2-éthylhexyle et le dimérate de n-octyle, qui permettent de fabriquer à la fois des produits moulés d'un seul tenant de densité unique et ceux sous forme de deux parties différentes couplées, en particulier de couches de densité éventuellement différente adhérant entre elles. De manière particulièrement préférée, on utilise le phtalate de di-isotridécyle, l'adipate de di-isotridécyle, le dodécanedioate de n-octyle et le dimérate de n-octyle, le phtalate de di-isotridécyle et l'adipate de di-isotridécyle étant particulièrement préférés.

On a trouvé que ces diesters, dans les proportions actives ci-après définies, se mélangent suffisamment facilement au prépolymère d'isocyanate et/ou au composé hydroxylé susceptible de réagir avec le prépolymère pour qu'il soit possible de les introduire dans le moule en mélange avec le prépolymère, en mélange avec le(s) composé(s) hydroxylé(s) susceptible(s) de réagir avec le prépolymère, ou en mélange avec les deux. De plus le diester selon l'invention peut être introduit indépendamment dans la tête de mélange des machines de moulage en même temps que les autres composants du mélange. Ce mode d'introduction est particulièrement favorable dans le cas où le diester est un dimérate.

Les diesters selon l'invention permettent en particulier le moulage de polyuréthanes ayant une densité comprise entre 0,2 et 1,25 g/cm³, densité obtenue notamment en faisant varier le pourcentage en poids de l'agent d'expansion dans le mélange global.

La quantité de diester que l'on ajoute est comprise entre 1 et 5 % en poids par rapport au poids total du mélange de moulage. Pour des quantités inférieures à 1 %, le nombre de moulages pouvant être effectués après utilisation d'un agent externe de démoulage n'est pas augmenté. Pour des quantités supérieures à 5 %, il n'y a plus d'augmentation sensible du nombre de démoulages entre deux utilisations successives d'agent externe de démoulage. L'agent de démoulage externe que l'on utilise de préférence est un mélange de polydiméthylsiloxanes linéaire(s) et/ou cyclique(s) et/ou de polydiméthylsiloxanes à terminaisons hydroxyle dont on enduit le moule initialement et après un certain nombre de moulages successifs sans enduction.

Le prépolymère d'isocyanate peut être obtenu à partir de tout isocyanate connu pour la préparation des polyuréthanes, qu'ils soient aliphatiques, cycloaliphatiques, aryliques, arylaliphatiques ou hétérocycliques. On utilise, par exemple, le méthylène diphényl isocyanate.

Le composé hydroxylé peut être un polyéther polyol ou un polyester polyol. Selon l'invention, on utilise, de préférence, un polyester polyol, en particulier un polyadipate. Il peut contenir également des polyols de poids moléculaire inférieur à 400 en tant qu'allongeurs de chaîne.

Le mélange à mouler peut contenir, de façon connue, d'autres additifs que l'agent de démoulage interne. On peut citer les agents d'expansion tels que l'eau, les hydrocarbures halogénés, des solvants à bas point d'ébullition tels que le pentane, des catalyseurs tels que les amines tertiaires, des émulsifiants ou des agents de stabilisation des mousses, tels que les siloxanes, des charges minérales et organiques telles que des fibres de verre, du mica, du talc, du carbonate de calcium ou des microsphères organiques telles que celles vendues sous la marque "EXPANDOCEL" par la société NOBEL INDUSTRIES. On peut également ajouter des additifs tels que des agents ignifugeants, des antistatiques, des colorants et des régulateurs de cellule. Il faut noter que l'on n'ajoute généralement pas de diluants liquides tels qu'une huile minérale, une huile végétale ou une oléfine cyclique.

L'utilisation de l'agent de démoulage interne selon l'invention est particulièrement adaptée au moulage de semelles microcellulaires pour chaussures, notamment de semelles à cellules fermées. Les semelles peuvent être fabriquées isolément et fixées ensuite par collage sur la tige de la chaussure ou peuvent être moulées par injection directe sur la tige de la chaussure. Dans ce cas, on a trouvé que l'utilisation des diesters selon l'invention permet de maintenir une bonne adhérence de la semelle en polyuréthane à la tige, en particulier à une tige de cuir.

Selon la présente invention, on peut également préparer des semelles dites "couplées" constituées de deux couches : une couche d'usure relativement compacte ayant une densité d'environ 1 à 1,25 et une couche de confort ayant une densité plus faible d'environ 0,4. Dans ce cas, la tige peut également être directement liée à la semelle lors du moulage. On a constaté que les deux couches adhèrent convenablement entre elles et que la couche de faible densité adhère avec la tige de la chaussure lorsqu'il y a injection directe sur ladite tige.

L'utilisation des diesters selon l'invention permet d'effectuer au moins 10 moulages et jusqu'à plus de 50 moulages consécutifs avant qu'il ne soit nécessaire d'appliquer à nouveau un agent de démoulage externe sur la surface du moule. On peut donc améliorer très nettement la fréquence de moulage et, par conséquent, réduire le temps et le coût de fabrication ainsi que la pollution due à l'évaporation du solvant de l'agent de démoulage externe ainsi qu'à la projection d'agent de démoulage externe hors du moule. L'addition des diesters selon l'invention ne modifie pas la réaction : on peut travailler aux mêmes températures avec les mêmes proportions de produits qu'en leur absence.

L'invention a également pour objet un produit moulé, et notamment une semelle de chaussure, obtenu par la mise en oeuvre du procédé ci-dessus défini ainsi qu'une chaussure dont la semelle est ainsi obtenue.

Les essais donnés ci-dessous, à titre d'exemples purement illustratifs et non limitatifs, permettront de mieux comprendre l'invention.

### Méthode générale de moulage

Les essais ont été effectués sur deux machines :
1) une machine commercialisée par la société "GUSBI", par laquelle on effectue la coulée du mélange à mouler en moule ouvert,
2) une machine commercialisée par la société "DESMA", par laquelle on injecte le mélange à mouler dans un moule fermé.

Les moules utilisés sont en alliage d'aluminium. Avant tout essai, ils sont nettoyés soigneusement avec de la N-méthylpyrrolidone, puis rincés au chlorure de méthylène et séchés à l'air libre. Ils sont thermostatés à 40-45 °C.

Un agent de démoulage externe (voir tableau V) est appliqué au pistolet dans les moules avant le premier moulage. Aucune autre pulvérisation n'est appliquée tant qu'il est possible d'obtenir des semelles ou des plaques sans collage, sans défaut et, plus généralement, sans aucune intervention particulière.

Les moules utilisés sont strictement de même type que ceux utilisés industriellement pour la fabrication soit de semelles unitaires (moulage isolé) destinées à être collées sur une tige de chaussure, soit de semelles de densité unique injectées directement sur une tige, soit de semelles de type "couplées" comportant une couche d'usure de densité plus élevée et une couche de confort de densité plus faible, injectées successivement. Les moules de plaques ont les dimensions suivantes : 15 x 20 cm, et une épaisseur variable de 0,5 à 1 cm.

Dans tous les cas, les temps de démoulage ou d'ouverture des moules ont été maintenus à leur valeur standard, c'est-à-dire à la valeur utilisée en l'absence d'agent de démoulage interne. Selon le polyuréthane préparé et selon le moule utilisé, ces temps varient entre 1,5 et 3 minutes.

### Produits utilisés pour les moulages

Ils sont obtenus par réaction d'un prépolymère de méthylène diphényl isocyanate (MDI) avec une composition de polyols incluant un polyester polyol, qui est un polyadipate.

### Polyadipates

Trois types de polyadipate ont été utilisés, qui diffèrent par les polyols mis en oeuvre ou par leur masse moléculaire.

**TABLEAU I**

| Polyadipate | Polyols utilisés (proportions en moles) | Masse moléculaire |
|---|---|---|
| Polyadipate I | Ethylène glycol 60 % Diéthylène glycol 40 % | 2 000 |
| Polyadipate II | Ethylène glycol 70 % Butane diol 30 % | 2 000 |
| Polyadipate III | Ethylène glycol 70 % Butane diol 30 % | 3 000 |

### Agents de démoulage interne

Les agents de démoulage interne utilisés sont donnés dans le tableau II ci-dessous.

**TABLEAU II**

| DIESTER | nombre total de carbones | DEx référence |
|---|---|---|
| Phtalate de di-isodécyle | 28 | DE1 |
| Phtalate de di-isoundécyle | 30 | DE2 |
| Phtalate de di-isotridécyle | 34 | DE3 |
| Adipate de di-isononyle | 24 | DE4 |
| Adipate de di-isodécyle | 26 | DE5 |
| Adipate de di-isotridécyle | 32 | DE6 |
| Adipate de di-n-alkyle C12-C14 (1) | ≈31,6 | DE7 |
| Dodécanedioate de 2-éthylhexyle | 28 | DE8 |
| Dodécanedioate de n-octyle | 28 | DE9 |
| Dimérate de 2-éthylhexyle (2) | 52 | DE10 |
| Dimérate de n-octyle (2) | 52 | DE11 |

| | | |
|---|---|---|
| (1) Obtenu à partir du mélange d'alcools C12/C14 = 70/30 "NAFOL" 12-14 S de la société Condéa | | |
| (2) Obtenu avec les acides dimères "PRIPOL 1017" de la société Unichema | | |

### Prépolymères

Trois types de prépolymères (A, B et C) ont été préparés à 16,5 % de NCO en fonction du diester DEx concerné.

**TABLEAU III**

| Composition des prépolymères | Référence |
|---|---|
| MDI + Polyadipate I | A |
| MDI + Polyadipate + 4 % Diester DEx | BDEx |
| MDI + Polyadipate + 7 % Diester DEx | CDEx |

### Compositions de polyols

On mélange un polyadipate, c'est-à-dire un polyester polyol, avec différents additifs, de façon à obtenir les compositions données dans le tableau IV.

**TABLEAU IV**

| Référence | Composition des polyols | % en poids |
|---|---|---|
| 1 | Polyadipate II | 95,40 |
| | Ethylène glycol (allongeur de chaîne) | 3,60 |
| | Triéthylène diamine (catalyseur) | 1,00 |
| 2DEx | Idem 1 + 2 % Diester DEx | |
| 3DEx | Idem 1 + 4 % Diester DEx | |
| 4 | Polyadipate II | 88,55 |
| | Ethylène glycol (allongeur de chaîne) | 10,30 |
| | Triéthylène diamine (catalyseur) | 0,40 |
| | NIAX Silicone SR 393 * (stabilisateur de cellules) | 0,40 |
| | Eau (agent d'expansion) | 0,35 |
| 5DEx | Idem 4 + 2 % Diester DEx | |
| 6 | Polyadipate III | 89,45 |
| | Ethylène glycol (allongeur de chaîne) | 9,00 |
| | Triéthylène diamine (catalyseur) | 0,70 |
| | NIAX Silicone SR 393 * (stabilisateur de cellules) | 0,40 |
| | Eau (agent d'expansion) | 0,45 |
| 7DEx | Idem 6 +2 % Diester DEx | |
| 8 | Polyadipate II | 89,95 |
| | Ethylène glycol (allongeur de chaîne) | 8,50 |
| | Triéthylène diamine (catalyseur) | 0,60 |
| | NIAX Silicone SR 393 * (stabilisateur de cellules) | 0,40 |
| | Eau (agent d'expansion) | 0,55 |
| 9DEx | Idem 8 + 2 % Diester DEx | |
| 10DEx | Idem 8 + 4 % Diester DEx | |
| 11 | Polyadipate II | 93,40 |
| | Ethylène glycol (allongeur de chaîne) | 5,60 |
| | Triéthylène diamine (catalyseur) | 1,00 |
| 12DEx | Idem 11 + 2 % Diester DEx | |

| | | |
|---|---|---|
| * NIAX Silicone SR 393 = tensioactif siliconé commercialisé par la société "WITCO Corporation" | | |

On a introduit un prépolymère défini ci-dessus dans le tableau III et une composition de polyols définie ci-dessus dans le tableau IV dans des moules dans les proportions pondérales (prépolymère/composition de polyols) indiquées au tableau V sous la rubrique R. Les composants sont thermostatés à 45-50°C. On a mesuré le nombre de moulages après une première pulvérisation d'agent de démoulage externe jusqu'à la nécessité d'une seconde pulvérisation et éventuellement après une seconde pulvérisation jusqu'à la nécessité d'une troisième pulvérisation. Les essais ont été effectués avec une machine de coulée "GUSBI" ou avec une machine d'injection "DESMA". Dans le cas de moulage de couches de densité unique (moulages unitaires), les résultats sont donnés dans le tableau V ci-après ; dans ce tableau, les deux essais de la première ligne correspondent à des moulages de plaques alors que les autres lignes correspondent à des moulages de semelles.

**TABLEAU V**

| MOULAGES UNITAIRES | | | | | | | | |
|---|---|---|---|---|---|---|---|---|
| Densité | Machine | Polyol | Prépolymère | R | % Diester dans mélange | Démoulant externe | Nombre initial de moulages | Après 2^{ème} pulvérisation |
| 1,2 | Gusbi | 1 | A | 0,54 | 0,0 | AP 7014-89(1) | 3-5 | - |
| 1,2 | Gusbi | 3DE6 | A | 0,53 | 2,6 | AP 7014-89 | 40-45 | 40-45 |
| 1,2 | Desma | 1 | A | 0,53 | 0,0 | AP 7014-89 | 3-5 | - |
| 1,2 | Desma | 3DE6 | A | 0,52 | 2,6 | AP 7014-89 | > 30* | - |
| 1,2 | Desma | 1 | BDE6 | 0,54 | 1,4 | AP 7014-89 | 20-25 | 20-25 |
| 1,2 | Desma | 1 | CDE6 | 0,54 | 2,5 | AP 7014-89 | > 30* | - |
| 1,2 | Desma | 12DE1 | BDE1 | 0,68 | 2,8 | FZ 3711 (2) | 10-12 | - |
| 1,2 | Desma | 11 | A | 0,70 | 0,0 | FZ 3711 | 4-6 | - |
| 1,2 | Desma | 12DE2 | BDE2 | 0,69 | 2,8 | FZ 3711 | 10-11 | - |
| 1,2 | Desma | 12DE3 | BDE3 | 0,68 | 2,8 | FZ 3711 | > 30* | - |
| 1,2 | Desma | 2DE4 | BDE4 | 0,53 | 2,7 | AP 7014-89 | 10-12 | - |
| 1,2 | Desma | 2DE5 | BDE5 | 0,52 | 2,7 | AP 7014-89 | 10-11 | - |
| 1,2 | Desma | 12DE5 | BDE5 | 0,68 | 2,8 | FZ 3711 | 12-13 | - |
| 1,2 | Desma | 3DE5 | BDE5 | 0,53 | 4,0 | AP 7014-89 | 10-12 | - |
| 1,2 | Desma | 12DE6 | BDE6 | 0,68 | 2,8 | FZ 3711 | 55 | 50 |
| 1,2 | Desma | 12DE6 | BDE6 | 0,68 | 2,8 | Siliconol NM1-100(3) | >25* | - |
| 1,2 | Desma | 12DE7 | BDE7 | 0,68 | 2,8 | FZ 3711 | > 30* | - |
| 1,2 | Desma | 12DE8 | BDE8 | 0,68 | 2,8 | FZ 3711 | > 40* | - |
| 1,2 | Desma | 12DE9 | BDE9 | 0,68 | 2,8 | FZ 3711 | 24-25 | - |
| 1,2 | Desma | 2DE10 | BDE10 | 0,54 | 2,7 | AP 7014-89 | 27-28 | - |
| 1,2 | Desma | 12DE11 | BDE11 | 0,69 | 2,8 | FZ 3711 | 12-14 | - |
| 0,55 | Gusbi | 4 | A | 1,17 | 0,0 | AP 7014-89 | 2-3 | - |
| 0,55 | Gusbi | 4 | BDE6 | 1,17 | 2,2 | AP 7014-89 | 10-12 | - |
| 0,55 | Gusbi | 5DE6 | BDE6 | 1,17 | 3,1 | AP 7014-89 | 15-20 | - |
| 0,55 | Desma | 6 | A | 1,02 | 0,0 | AP 7014-89 | 3-4 | - |
| 0,55 | Desma | 6 | CDE6 | 1,02 | 3,5 | AP 7014-89 | 15-20 | - |
| 0,55 | Desma | 7DE6 | BDE6 | 1,02 | 3,0 | AP 7014-89 | 15-20 | - |
| 0,45 | Desma | 8 | A | 1,08 | 0,0 | AP 7014-89 | 2-3 | - |
| 0,45 | Desma | 8 | BDE6 | 1,08 | 2,1 | AP 7014-89 | 25-30 | 25-30 |
| 0,45 | Desma | 8 | CDE6 | 1,08 | 3,6 | AP 7014-89 | > 30* | - |

| | | | | | | | | |
|---|---|---|---|---|---|---|---|---|
| * essai arrêté avant que ne soit atteinte la limite du système | | | | | | | | |
| (1) Agent de démoulage de la société Air Products | | | | | | | | |
| (2) Silicone Fluid FZ 3711 de la Société Witco Corporation | | | | | | | | |
| (3) Huile de silicone : Polydiméthylsiloxane de la Société Hüls | | | | | | | | |

Les polyuréthanes ayant une densité de 1,2 correspondent à des couches d'usure de semelles "couplées", les polyuréthanes ayant une densité de 0,45 correspondent à des couches de confort de semelles "couplées" et les polyuréthanes de densité 0,55 correspondent à des semelles mono-couche (monodensité).

Ces essais montrent qu'en présence des diesters de l'invention le nombre de moulages possible entre deux pulvérisations successives d'agent externe de démoulage augmente nettement.

On a également effectué des essais de moulage de deux couches de densité différente par injections successives (semelles "couplées"), la première couche correspondant à une couche d'usure ayant une densité de 1,2 et la seconde couche correspondant à une couche de confort ayant une densité de 0,45. On a utilisé une machine d'injection "DESMA". Les résultats sont donnés dans le tableau VI.

**TABLEAU VI**

| SEMELLES COUPLÉES | | | | | | | | | | |
|---|---|---|---|---|---|---|---|---|---|---|
| Couche Usure (d = 1,2) | | | | Couche Confort (d = 0,45) | | | | Démoulant externe | Nombre de moulages (1) | |
| Polyol | Prépolymère | R | % Diester | Polyol | Prépolymère | R | % Diester | | Après 1^{ère} pulvérisation | Après 2^{ème} pulvérisation |
| 1 | A | 0,54 | 0,0 | 8 | A | 1,08 | 0,0 | AP 7014-89(2) | 3-5 | - |
| 3DE6 | A | 0,53 | 2,6 | 10DE6 | A | 1,08 | 1,9 | AP 7014-89 | 50 | 45-50 |
| 2DE6 | BDE6 | 0,53 | 2,7 | 8 | BDE6 | 1,08 | 2,1 | AP 7014-89 | 30-35 | 30-35 |
| 2DE6 | BDE6 | 0,53 | 2,7 | 9DE6 | BDE6 | 1,06 | 3,0 | AP 7014-89 | >35(*) | - |
| 12DE3 | BDE3 | 0,68 | 2,8 | 9DE3 | BDE3 | 1,06 | 3,0 | FZ 3711(3) | 56 | 45-50 |
| 11 | CDE6 | 0,69 | 2,9 | 8 | CDE6 | 1,08 | 3,6 | FZ 3711 | 62 | - |
| 12DE9 | BDE9 | 0,68 | 2,8 | 9DE9 | BDE9 | 1,06 | 3,0 | FZ 3711 | >25(*) | - |
| 12DE11 | BDE11 | 0,68 | 2,8 | 9DE11 | BDE11 | 1,06 | 3,0 | FZ 3711 | 13-16 | - |

| | | | | | | | | | | |
|---|---|---|---|---|---|---|---|---|---|---|
| (*) Arrêt avant d'atteindre la limite des possibilités | | | | | | | | | | |
| (1) Nombre de moulages possibles sans défaut sur les 2 couches, l'une ou l'autre pouvant encore être acceptable | | | | | | | | | | |
| (2) AP 7014-89 : Agent de démoulage de la Société Air Products | | | | | | | | | | |
| (3) Silicone Fluid FZ 3711 de la société Witco Corporation | | | | | | | | | | |

Dans ce cas également on voit qu'en présence des diesters de l'invention, le nombre de démoulages possible entre deux pulvérisations successives d'agent de démoulage externe augmente nettement.

On a mesuré, sur les moulages couplés correspondant à la quatrième ligne du tableau VI, selon la norme EN 344 (paragraphe 5.1) l'adhérence entre les deux couches, qui est de 4,2 à 7,5 N/mm, et l'adhérence entre la couche de confort et une tige en cuir, qui est de 6 à 10 N/mm. Ces adhérences sont convenables puisque, par exemple selon la norme EN 344, la valeur minimale de l'adhérence doit être de 4 N/mm.

## Revendications

1. Procédé de moulage de polyuréthane selon lequel on introduit dans un moule un mélange contenant au moins un prépolymère d'isocyanate et au moins un composé organique hydroxylé susceptible de réagir avec ledit prépolymère, un agent de démoulage interne étant ajouté audit mélange, **caractérisé par le fait que** ledit agent de démoulage interne est constitué par un diester d'au moins un diacide aliphatique, aromatique, alicyclique ou dimère et d'au moins un monoalcool aliphatique linéaire ou ramifié, ledit diester comportant au total de 24 à 52 atomes de carbone, et la quantité de diester introduite est comprise entre 1 et 5 % en poids par rapport au poids total du mélange de moulage.

2. Procédé de moulage selon la revendication 1, **caractérisé par le fait que** le diester ou le mélange pondéré des diesters comporte au total 26 à 36 atomes de carbone.

3. Procédé de moulage selon l'une des revendications 1 ou 2, **caractérisé par le fait que** le monoalcool comporte 7 à 14 atomes de carbone.

4. Procédé de moulage selon l'une des revendications 1 à 3, **caractérisé par le fait que** le diester est le phtalate de di-isotridécyle ou l'adipate de di-isotridécyle.

5. Procédé de moulage selon l'une des revendications 1 à 4, **caractérisé par le fait que** le diester est introduit dans le moule en mélange avec le prépolymère, le(s) composé(s) organique(s) hydroxylé(s) ou avec les deux constituants.

6. Procédé de moulage selon l'une des revendications 1 à 4, **caractérisé par le fait que** le diester est introduit indépendamment dans la tête de mélange d'un appareil de moulage comportant le moule.

7. Procédé de moulage selon l'une des revendications 1 à 6, **caractérisé par le fait que** le composé organique hydroxylé est un polyester polyol ayant une fonctionnalité d'au moins 2.

8. Procédé de moulage selon la revendication 7, **caractérisé par le fait que** le polyester polyol est un polyadipate.

9. Procédé de moulage selon l'une des revendications 1 à 8, **caractérisé par le fait qu'**initialement et après un certain nombre de moulages successifs, on enduit le moule d'un agent de démoulage externe comportant un ou plusieurs polydiméthylsiloxanes linéaire(s) et/ou cyclique(s) et un ou plusieurs polydiméthylsiloxane(s) à terminaisons hydroxyle.

10. Procédé de moulage selon l'une des revendications 1 à 9, **caractérisé par le fait qu'**on moule des semelles microcellulaires pour chaussures.

11. Procédé de moulage selon l'une des revendications 1 à 10, **caractérisé par le fait qu'**on moule des semelles comportant deux couches de densité différente.

12. Produit moulé obtenu par la mise en oeuvre du procédé selon l'une des revendications 1 à 11.

13. Chaussure comportant une semelle moulée par la mise en oeuvre du procédé selon l'une des revendications 1 à 11.

## Patentansprüche

1. Verfahren zum Formen von Polyurethan, bei dem man in eine Form ein Gemisch einbringt, das wenigstens ein Isocyanatpräpolymer und wenigstens eine zur Reaktion mit dem Präpolymer befähigte organische Hydroxylverbindung enthält, und dem Gemisch ein internes Entformungsmittel zufügt, **dadurch gekennzeichnet, dass** das interne Entformungsmittel aufgebaut ist aus einem Diester wenigstens einer aliphatischen, aromatischen, alicyclischen oder dimeren Disäure und wenigstens eines linearen oder verzweigten aliphatischen Monoalkohols, wobei der Diester insgesamt 24 bis 52 Kohlenstoffatome umfasst und die zugesetzte Menge Diester 1 bis 5 Gew.-%, bezogen auf das Gesamtgewicht des zu formenden Gemisches, beträgt.

2. Verfahren zum Formen nach Anspruch 1, **dadurch gekennzeichnet, dass** der Diester oder das gewichtete Gemisch der Diester insgesamt 26 bis 36 Kohlenstoffatome umfasst.

3. Verfahren zum Formen nach Anspruch 1 oder 2, **dadurch gekennzeichnet, dass** der Monoalkohol 7 bis 14 Kohlenstoffatome umfasst.

4. Verfahren zum Formen nach einem der Ansprüche 1 bis 3, **dadurch gekennzeichnet, dass** es sich bei dem Diester um Diisotridecylphthalat oder Diisotridecyladipat handelt.

5. Verfahren zum Formen nach einem der Ansprüche 1 bis 4, **dadurch gekennzeichnet, dass** man den Diester im Gemisch mit dem Präpolymer, der (den) organischen Hydroxylverbindung(en) oder mit beiden Bestandteilen in die Form einbringt.

6. Verfahren zum Formen nach einem der Ansprüche 1 bis 4, **dadurch gekennzeichnet, dass** man den Diester unabhängig in den Mischkopf einer die Form umfassenden Gießvorrichtung einbringt.

7. Verfahren zum Formen nach einem der Ansprüche 1 bis 6, **dadurch gekennzeichnet, dass** es sich bei der organischen Hydroxylverbindung um ein Polyesterpolyol mit einer Funktionalität von wenigstens 2 handelt.

8. Verfahren zum Formen nach Anspruch 7, **dadurch gekennzeichnet, dass** es sich bei dem Polyesterpolyol um ein Polyadipat handelt.

9. Verfahren zum Formen nach einem der Ansprüche 1 bis 8, **dadurch gekennzeichnet, dass** man anfangs und nach einer bestimmten Zahl aufeinanderfolgender Formvorgänge die Form mit einem externen Entformungsmittel bestreicht, das ein oder mehrere lineare und/oder cyclische Polydimethylsiloxane und ein oder mehrere Hydroxyl-terminierte Polydimethylsiloxane umfasst.

10. Verfahren zum Formen nach einem der Ansprüche 1 bis 9, **dadurch gekennzeichnet, dass** man mikrozelluläre Schuhsohlen formt.

11. Verfahren zum Formen nach einem der Ansprüche 1 bis 10, **dadurch gekennzeichnet, dass** man Sohlen formt, die zwei Schichten unterschiedlicher Dichte umfassen.

12. Formkörper, erhalten nach dem Verfahren nach einem der Ansprüche 1 bis 11.

13. Schuh, umfassend eine nach dem Verfahren nach einem der Ansprüche 1 bis 11 geformte Sohle.

## Claims

1. Process for moulding polyurethane, according to which a mixture containing at least one isocyanate prepolymer and at least one hydroxylated organic compound which can react with said prepolymer is introduced into a mould, an internal demoulding agent being added to said mixture, **characterized in that** said internal demoulding agent consists of a diester of at least one aliphatic, aromatic, alicyclic or dimeric diacid and of at least one linear or branched aliphatic monoalcohol, said diester containing 24 to 52 carbon atoms in total, and the amount of diester introduced is between 1 and 5% by weight relative to the total weight of the moulding mixture.

2. Moulding process according to Claim 1, **characterized in that** the diester or the weighted mixture of diesters contains 26 to 36 carbon atoms in total.

3. Moulding process according to either of Claims 1 and 2, **characterized in that** the monoalcohol contains 7 to 14 carbon atoms.

4. Moulding process according to one of Claims 1 to 3, **characterized in that** the diester is diisotridecyl phthalate or diisotridecyl adipate.

5. Moulding process according to one of Claims 1 to 4, **characterized in that** the diester is introduced into the mould as a mixture with the prepolymer, the hydroxylated organic compound(s) or with both constituents.

6. Moulding process according to one of Claims 1 to 4, **characterized in that** the diester is introduced independently into the mixing head of a moulding machine containing the mould.

7. Moulding process according to one of Claims 1 to 6, **characterized in that** the hydroxylated organic compound is a polyester polyol with a functionality of at least 2.

8. Moulding process according to Claim 7, **characterized in that** the polyester polyol is a polyadipate.

9. Moulding process according to one of Claims 1 to 8, **characterized in that**, initially and after a certain number of successive moulding operations, the mould is coated with an external demoulding agent containing one or more linear and/or cyclic polydimethylsiloxanes and one or more polydimethylsiloxanes containing hydroxyl ends.

10. Moulding process according to one of Claims 1 to 9, **characterized in that** microcellular soles for shoes are moulded.

11. Moulding process according to one of Claims 1 to 10, **characterized in that** soles containing two layers of different density are moulded.

12. Moulded product obtained by carrying out the process according to one of Claims 1 to 11.

13. Shoe containing a sole moulded by carrying out the process according to one of Claims 1 to 11.
